# EUROPEAN PATENT SPECIFICATION

(11) **EP 3 164 009 B1**
(45) Date of publication and mention of the grant of the patent: **06.03.2019**
(21) Application number: 15744691.5
(22) Date of filing: 01.07.2015
(51) Int. Cl.: A23C 15/12, A23D 7/00

(54) **BUTTER SUBSTITUTE**
BUTTERERSATZ
SUBSTITUT DE BEURRE

(30) Priority: 01.07.2014 GB 201411693
(43) Date of publication of application: 10.05.2017
(73) Proprietor: Dairy Best Ltd., Victoria (SC)
(72) Inventor: BARRATT, Duncan, 6530 George (ZA)
(74) Representative: Weber, Jean-François
(86) International application number: PCT/IB2015/054962
(87) International publication number: WO 2016/001858

(56) References cited:
- EP-A1- 0 185 000
- EP-A1- 0 185 631
- EP-A1- 1 688 044
- WO-A1-99/51105
- DD-A5- 291 239
- GB-A- 2 158 452
- GB-A- 2 208 296
- US-A- 4 540 593
- US-A- 4 758 446

## Description

### FIELD OF THE INVENTION

This invention relates to cooking fats and particularly to cooking fats that are suitable as substitutes for butter - especially for commercial baking, although they can also be used as substitutes for butter in general domestic baking applications.

### BACKGROUND TO THE INVENTION

Traditionally, a wide variety of baking recipes required the use of butter, but butter has lost some popularity due to its high cost. As a result, many attempts have been made to substitute butter in baking, but substitutes have fallen short on replicating any one of the taste, texture, melting points, boiling points, etc. of pure butter.

Some of the attempts made to replace butter include margarines and spreads that are manufactured using vegetable fats without significant quantities of dairy fats and therefore have molecular structures that differ substantially from dairy fats. These margarines and spreads are typically intended to replace butter as a spread on bread, with a butter-like taste and texture, but that is soft at typical food refrigeration temperatures. Low fat and regular spreads typically contain fats in the form of hydrogenated vegetable oils. In the hydrogenation process, in an attempt to prolong shelf life, essential fatty acids in the relatively healthy plant oils are replaced by hydrogenated fats, which are known to pose various health risks. Such spreads and margarines also typically contain synthetic colorants and preservatives - which also pose health risks.

Increases in international butter prices have caused industrial consumers to consider using blends as an alternative to butter in their recipes, although being allowed to claim use of real butter on retail product packaging holds advantages (because consumers are familiar with the taste and textural advantages of real butter).

When baking with currently available margarine or blends (using vegetable oils or even canola oil), the results achieved differ significantly from the results obtained when using butter, because the vegetable oils produce an oily residue, an undesirable bitter taste in the final baked product, and baked products that are brittle and prone to cracking.

The present invention seeks to provide a cooking fat that can be used as a substitute for butter, with attributes that simulate butter as closely as possible, in a cost-effective and healthy manner. The invention particularly seeks to provide a cooking fat to substitute butter in baking and further particularly seeks to avoid the adverse health effects of hydrogenated fats, colorants and preservatives.

### SUMMARY OF THE INVENTION

According to a first aspect of the present invention there is provided a baking fat product for use as a substitute for butter, as recited in the appended claims.

The palm oil preferably has a slip melting point of 33 to 35 degrees Celsius; the cooking fat product preferably has an overall moisture content of about 16% (by volume), and the palm oil preferably comprises about 40% of the cooking fat product (by volume).

The baking fat product may include at least one culture flavour selected from:
Lactococcuslactis subsp. Cremoris,
Lactococcus lactis subsp. Diacetylactis, and
Leuconostoc Mensenteroides.

The baking fat product may further include dry milk solids such as spray dried buttermilk solids, alpha mixed tochopherol, and/or a stabiliser such as sodium hydroxide.

The baking fat product may have a pH of between 5 and 5.5, e.g. an approximate pH of 5.2.

According to another aspect of the present invention there is provided a process for preparing a fat product as recited in the appended claims.

The elevated temperature to which the ingredients are heated may be about 84 degrees Celsius and the step of cooling the ingredients to crystallize, may take place in a scrape surface cooler.

### EXAMPLE

For a better understanding of the present invention, and to show how it may be carried into effect, the invention will now be described by way of non-limiting example.

Approximately equal parts of butter fat (butter or cream) and palm oil (by mass), as well as water and butter cultures are combined and are heated with low temperature steam to an elevated temperature that is well above the melting points of the butter fat and palm oil. The steps of combining and heating these ingredients need not take place sequentially, although it is preferred that they be combined at room temperature and then heated together. The low temperature steam needs to be hot enough to melt the fats - i.e. it should be above 35°C and its temperature can be higher, but preferably it should not exceed 95°C. Likewise, the elevated temperature to which the ingredients are heated can be any temperature above the melting points of the fats, but for good blending of the fats, the elevated temperature should be between 75 and 100°C - preferably about 84°C.

The combined ingredients are held at the elevated temperature for a prolonged period of 10 to 30 minutes to stabilize the mix and, it is not essential, but the ingredients are preferably gently stirred during this step, and then the ingredients are slowly allowed to cool, preferably over a period of 30 to 45 minutes, to a temperature between 20° and 32° C in a "cold mix" production facility to crystallize with a scrape surface cooler with shear mixing between 32°C and 20°C - to allow crystal formation of very small mixed fat globule, to ensure stability of the fats. It should be mentioned that "crystallization" in this context refers to the process by which the fats become solid and the term does not refer to the formation of a course-textured structure. The formation of large fat globules that result in a course texture is also termed "crystallization" in the art and is highly undesirable in the present invention. In fact, the purpose of gradual cooling and crystallization in a scrape surface cooler, is to ensure a smooth texture.

The heating and cooling processes preferably take place in vessels that are covered to a sufficient extent to prevent significant moisture loss. One example of a suitable vessel for heating the ingredients in Stetton pot or similar.

The butter fat is preferably sweet cream butter made from fresh cows' milk, although the invention can potentially also be applied using butter fat produced by other methods.

The palm oil can be any palm oil with a melting point that resembles that of butter - which melts at 32 to 35 degrees Celsius. Suitable palm oils will thus be in a semisolid state at room temperature and will soften and melt similarly to butter. Suitable palm oil for the present invention is preferably refined, bleached and deodorized palm oil (RBDPO) and is preferably produced by environmentally acceptable methods, in accordance with the requirements of the Roundtable on Sustainable Palm Oil (RSPO) organisation. One example of a suitable palm oil is Chocreme™ grade, supplied by Hudson & Knight (Pty) Ltd of South Africa, which is a refined and deodorised palm oil with a slip melting point of 33 to 35 degrees Celsius - i.e. its melting point is approximately equal to that of butter.

The quantities and details of the ingredients used in the specific example are:

| | |
|---|---|
| Salted butter | 489 kg. |
| Palm oil (Chocreme™) | 397kg. |
| Butter culture | 106 kg. |
| Salt | 7,5 kg. |
| Alpha mixed tochopherol | 0,5 kg. |
| Culture flavouring | 0,250 kg. |

The quantity of water combined with the other ingredients is varied according to the moisture contents of the palm oil, so that the overall moisture contents of the combined ingredients is between 16% and 18% (by volume) - preferably as close as possible to 16 % (by volume).

The culture flavouring preferably includes any one or more of the following strains:
Lactococcuslactis subsp. Cremoris,
Lactococcus lactis subsp. Diacetylactis and
Leuconostoc Mensenteroides.

In a preferred embodiment, the culture flavouring includes a mixture of all three of these strains.

The culture flavouring can be prepared using any suitable substrate, but preferably the substrate comprises dry milk solids in the form of spray dried buttermilk powder. (Buttermilk contains almost all the Phospholipids (stabilizer/emulsifier) found in milk).

The completed blend, which is now in the form of a cooking fat product according to the invention, is cooled to a temperature where it is still soft enough for processing, e.g. about 25 °C and is packed into any desired containers, although sealed containers are preferred, such as 25kg cardboard cartons with polymeric inner liners, or the like.

Apart from the need to cool the combined product gradually to avoid large crystal formation, it is also essential to allow the cooking fat product to cool gradually to room temperature to avoid formation of surface moisture.

Analytical, nutritional and microbiological data for the cooking fat product of the example are:

### Analytical Data (in volume percentage):

| | |
|---|---|
| Moisture | 15.99% |
| Butterfat | 40.53% |
| Palm Oil | 40.53% |
| Solids non fat | 1.42 % |
| Salt | 1.53 % |

### Microbiological Data

| | |
|---|---|
| Total Plate Count | <10.000/g |
| Coliforms | < 10/g |
| Yeast & Moulds | <10/g |

The pH of the cooking fat product is preferably between 5 and 5.5 and in the example, it is 5.2.

One of the main reasons why existing combinations of dairy fats and vegetable fats are not suitable for baking, is that the dairy and vegetable fats separate when they are exposed to heat during the baking process, resulting in baked products that are oily, have an undesirable bitter taste and are dry and brittle. These adverse effects are not noticed in products baked using a cooking fat product of the present invention as a substitute for butter and it is believed that these adverse effects are avoided because the butter fat and palm oil do not separate when exposed to heat because they have behave very similarly when exposed to heat. In particular, they have practically the same melting point.

Another reason why it is believe that existing combinations of dairy fats and vegetable fats are not suitable for baking, is that the moisture contents of these combinations is not suitable for baking and is usually too high in fat products intended as spreads. According to the present invention, the moisture contents of the fat product is maintained at around16 % (by volume) and it is believed that this has an effect on the elasticity of dough produced using the product. High moisture contents can result in baked products having an undesirable texture, can crack too easily and can have a bitter taste. Low moisture contents can result in the baked products being dry and having a burnt taste.

Blends containing vegetable, canola and other oils produce tend to be "softer" and more "spreadable" at refrigeration temperature, which has obvious retail / domestic appeal as spreads (compared to butter that is often hard and difficult to use at typical refrigeration temperatures). Producing such blends has also been done so extensively for many decades that it has become the industry norm. Palm oil, by contrast, is harder than these blends when it has been refrigerated (similar to butter). As a result, palm oil is has not until the current invention, been considered suitable for use as an ingredient for producing a butter substitute for baking, but it has been found that palm oil does not interfere with the butter taste profile and it does not produce an oily residue when baking - thus providing a butter substitute far superior to the prior art. Palm oil is also a non-hydrogenated fat.

The product of the present invention does not contain any hydrogenated fats, colorants or preservatives, yet has an appearance and taste that resembles butter. (Its colour is yellow to light yellow and its flavour and taste are free from rancidity and off-flavours.) The product can be produced at a substantially lower cost than butter. The shelf life of the product is typically about 24 months, when stored in food grade export cartons with poly liner, under optimal (dry) storage conditions (maximum temperature - 18°C)

The invention has been described above in respect of butter substitutes for baking purposes.

## Claims

1. A baking fat product for use as a substitute for butter when baking, said baking fat product comprising butterfat and palm oil as its main ingredients (by volume), **characterised in that** said butterfat and palm oil comprise between 70% and 90% of the baking fat product (by volume), said palm oil does not exceed 50% of the baking fat product (by volume), said palm oil is a refined and deodorised fat with a melting point approximately equal to that of butter, and said baking fat product has an overall moisture content of 16% (by volume).

2. A baking fat product according to claim 1, **characterised in that** said palm oil has a slip melting point of 33 to 35 degrees Celsius.

3. A baking fat product according to any one of the preceding claims, **characterised in that** the palm oil comprises 40% of the baking fat product (by volume).

4. A baking fat product according to any one of the preceding claims, **characterised in that** said baking fat product includes at least one culture flavour selected from:
Lactococcuslactis subsp. Cremoris,
Lactococcus lactis subsp. Diacetylactis, and
Leuconostoc Mensenteroides.

5. A baking fat product according to claim 4, **characterised in that** said baking fat products includes dry milk solids.

6. A baking fat product according to claim 5, **characterised in that** said dry milk solids are spray dried buttermilk solids.

7. A baking fat product according to any one of the preceding claims, **characterised in that** said baking fat product includes alpha mixed tochopherol.

8. A baking fat product according to any one of the preceding claims, **characterised in that** said baking fat product includes a stabiliser.

9. A baking fat product according to claim 8, **characterised in that** said stabiliser is sodium hydroxide.

10. A baking fat product according to any one of the preceding claims, **characterised in that** said baking fat product has a pH of between 5 and 5.5.

11. A baking fat product according to claim 10, **characterised in that** said baking fat product has a pH of 5.2.

12. A process for preparing a baking fat product according to any one of the preceding claims, **characterised in that** said process comprises:
heating the ingredients of the baking fat product to an elevated temperature between 75 and 100 degrees Celsius;
stabilising the heated ingredients at the elevated temperature for between 10 and 30 minutes; and
gradually cooling the ingredients over a period of 30 to 45 minutes so that the ingredients crystallize at a temperature between 20 and 32 degrees Celsius.

13. A process according to claim 12, **characterised in that** the elevated temperature to which the ingredients are heated is 84 degrees Celsius.

14. A process according to claim 12 or claim 13, **characterised in that** the step of cooling the ingredients to crystallize, takes place in a scrape surface cooler.

## Patentansprüche

1. Backfettprodukt zur Verwendung als Ersatz für Butter beim Backen, wobei das Backfettprodukt Butterfett und Palmöl als Hauptbestandteile (bezogen auf das Volumen) umfasst, **dadurch gekennzeichnet, dass** das Butterfett und Palmöl zwischen 70 % und 90 % des Backfettprodukts (bezogen auf Volumen) umfassen, wobei das Palmöl 50 % des Backfettprodukts (bezogen auf das Volumen) nicht übersteigt, das Palmöl ein raffiniertes und desodoriertes Fett mit einem Schmelzpunkt ist, der ungefähr gleich dem von Butter ist, und das Backfettprodukt eine Gesamtfeuchtigkeitsgehalt von 16 % (bezogen auf das Volumen) aufweist.

2. Backfettprodukt nach Anspruch 1, **dadurch gekennzeichnet, dass** das Palmöl einen Gleitschmelzpunkt von 33 bis 35 Grad Celsius aufweist.

3. Backfettprodukt nach einem der vorhergehenden Ansprüche, **dadurch gekennzeichnet, dass** das Palmöl 40 % des Backfettprodukts (bezogen auf das Volumen) umfasst.

4. Backfettprodukt nach einem der vorhergehenden Ansprüche, **dadurch gekennzeichnet, dass** das Backfettprodukt mindestens ein Kulturaroma enthält, ausgewählt aus:
Lactococcus lactis subsp. cremoris,
Lactococcus lactis subsp. diacetylactis und
Leuconostoc mensenteroides.

5. Backfettprodukt nach Anspruch 4, **dadurch gekennzeichnet, dass** die Backfettprodukte Trockenmilchfeststoffe enthalten.

6. Backfettprodukt nach Anspruch 5, **dadurch gekennzeichnet, dass** die Trockenmilchfeststoffe sprühgetrocknete Buttermilchfeststoffe sind.

7. Backfettprodukt nach einem der vorhergehenden Ansprüche, **dadurch gekennzeichnet, dass** das Backfettprodukt gemischtes alpha-Tocopherol enthält.

8. Backfettprodukt nach einem der vorhergehenden Ansprüche, **dadurch gekennzeichnet, dass** das Backfettprodukt einen Stabilisator enthält.

9. Backfettprodukt nach Anspruch 8, **dadurch gekennzeichnet, dass** es sich bei dem Stabilisator um Natriumhydroxid handelt.

10. Backfettprodukt nach einem der vorhergehenden Ansprüche, **dadurch gekennzeichnet, dass** das Backfettprodukt einen pH-Wert zwischen 5 und 5,5 aufweist.

11. Backfettprodukt nach Anspruch 10, **dadurch gekennzeichnet, dass** das Backfettprodukt einen pH-Wert von 5,2 aufweist.

12. Verfahren zur Herstellung eines Backfettprodukts nach einem der vorhergehenden Ansprüche, **dadurch gekennzeichnet, dass** das Verfahren umfasst:
- Erhitzen der Bestandteile des Backfettprodukts auf eine erhöhte Temperatur zwischen 75 und 100 Grad Celsius;
- Stabilisieren der erhitzten Bestandteile bei der erhöhten Temperatur für zwischen 10 und 30 Minuten; und
- allmähliches Abkühlen der Bestandteile über einen Zeitraum von 30 bis 45 Minuten, so dass die Bestandteile bei einer Temperatur zwischen 20 und 32 Grad Celsius kristallisieren.

13. Verfahren nach Anspruch 12, **dadurch gekennzeichnet, dass** die erhöhte Temperatur, auf die die Bestandteile erhitzt werden, 84 Grad Celsius beträgt.

14. Verfahren nach Anspruch 12 oder Anspruch 13, **dadurch gekennzeichnet, dass** der Schritt des Abkühlens der Bestandteile zum Kristallisieren in einem Kratzkühler erfolgt.

## Revendications

1. Produit gras pour cuisson destiné à être utilisé en tant que substitut du beurre lors de la cuisson, ledit produit gras pour cuisson comprenant de la matière grasse butyrique et de l'huile de palme en tant qu'ingrédients principaux (en volume), **caractérisé en ce que** lesdites matière grasse butyrique et huile de palme représentent entre 70 % et 90 % du produit gras pour cuisson (en volume), ladite huile de palme ne dépassant pas 50 % du produit gras pour cuisson (en volume), ladite huile de palme étant une graisse raffinée et désodorisée dont le point de fusion est sensiblement égal à celui du beurre et ledit produit gras pour cuisson présentant une teneur en humidité totale de 16 % (en volume).

2. Produit gras pour cuisson selon la revendication 1, **caractérisé en ce que** ladite huile de palme présente un point de fusion de glissement de 33 à 35 degrés Celsius.

3. Produit gras pour cuisson selon l'une quelconque des revendications précédentes, **caractérisé en ce que** l'huile de palme comprend 40% du produit gras pour cuisson (en volume).

4. Produit gras pour cuisson selon l'une quelconque des revendications précédentes, **caractérisé en ce que** ledit produit gras pour cuisson comprend au moins une saveur de culture sélectionnée parmi :
Lactococcus lactis subsp. cremoris,
Lactococcus lactis subsp. diacetylactis, et
Leuconostoc mensenteroides.

5. Produit gras pour cuisson selon la revendication 4, **caractérisé en ce que** lesdits produits gras pour cuisson comprennent des solides de lait sec.

6. Produit gras pour cuisson selon la revendication 5, **caractérisé en ce que** lesdits solides de lait sec sont des solides de babeurre séchés par atomisation.

7. Produit gras pour cuisson selon l'une quelconque des revendications précédentes, **caractérisé en ce que** ledit produit gras pour cuisson comprend de l'alpha-tocophérol mixte.

8. Produit gras pour cuisson selon l'une quelconque des revendications précédentes, **caractérisé en ce que** ledit produit gras pour cuisson comprend un stabilisant.

9. Produit gras pour cuisson selon la revendication 8, **caractérisé en ce que** ledit stabilisant est l'hydroxyde de sodium.

10. Produit gras pour cuisson selon l'une quelconque des revendications précédentes, **caractérisé en ce que** ledit produit gras pour cuisson présente un pH compris entre 5 et 5,5.

11. Produit gras pour cuisson selon la revendication 10, **caractérisé en ce que** ledit produit gras pour cuisson présente un pH de 5,2.

12. Procédé de préparation d'un produit gras pour cuisson selon l'une quelconque des revendications précédentes, **caractérisé en ce que** ledit procédé comprend :
- un chauffage des ingrédients du produit gras pour cuisson à une température élevée entre 75 et 100 degrés Celsius ;
- une stabilisation des ingrédients chauffés à la température élevée durant entre 10 et 30 minutes ; et
- un refroidissement progressif des ingrédients sur une période de 30 à 45 minutes de façon que les ingrédients cristallisent à une température comprise entre 20 et 32 degrés Celsius.

13. Procédé selon la revendication 12, **caractérisé en ce que** la température à laquelle les ingrédients sont chauffés est de 84 degrés Celsius.

14. Procédé selon la revendication 12 ou la revendication 13, **caractérisé en ce que** l'étape de refroidissement des ingrédients à cristalliser, se déroule dans un refroidisseur de surface à raclage.
